# EUROPEAN PATENT APPLICATION

(11) **EP 1 528 562 A1**
(43) Date of publication of application: **04.05.2005**
(21) Application number: 04256664.6
(22) Date of filing: 28.10.2004
(51) Int. Cl.: G11B 20/18, G11B 27/10

(54) **Method of recording, and apparatus to record, address information on disc-type information storage medium, and disc-type information storage medium therefor**

(30) Priority: 30.10.2003 KR 2003076355; 30.10.2003 KR 2003076356
(71) Applicant: Samsung Electronics Co., Ltd., Suwon-si, Gyeonggi-do 442-742 (KR)
(72) Inventor: Hwang, Sung-hee, Seoul (KR); Lee, Yoon-woo, Suwon-si, Gyeonggi-do (KR)
(74) Representative: Robinson, Ian Michael

(57) **Abstract**

A disc-type information storage medium (100), and a method of recording and apparatus to record address information on the disc-type information storage medium (100), the storage medium including data recorded in at least two recording unit blocks (RUBs) having different sizes, wherein address information corresponding to the RUBs having different sizes includes address blocks having a same data structure regardless of a size of the respective RUBs.

## Description

The present invention relates to a disc-type information storage medium, and more particularly, to a method of recording, and an apparatus to record, address information on a disc-type information storage medium, and the disc-type information storage medium on which the address information is recorded.

In general, when data is recorded on an optical disc, the data is recorded using the same type of basic recording unit over the entire area of the optical disc. The basic recording unit is called a recording unit block (RUB) or an error correction block.

The RUB applied to a conventional optical disc is 32KB or 64KB in size. According to the development of a next-generation DVD having a 120mm-diameter, which can store 25GB of data on one recording layer, the size of the RUB has been increasing, such as to 64KB, in order to compensate for a decrease of error correction capability which is due to an increase of recording linear density.

Information for disc management is generally allocated at an inner or outer area of an inner circumstance of a disc, and one or a few 2KB sectors may contain this information. A disc defect structure for defect management by a disc drive includes a disc definition structure (DDS) and a defect list (DFL) in a rewritable information storage medium, and the size of the DDS including information indicating a location and the size of a spare area for substitution when an error is generated, information indicating a beginning and an ending position of a user area, and information indicating a location of the DFL does not exceed one sector (2KB). The size of the DFL is much smaller than one 64KB block when the disc is initially used, since the DFL stores information substituted for defects generated by using the disc.

Also, in a write-once information storage medium, when a user data area of a disc is used by dividing it into a plurality of recording zones in the same manner as sequentially recording a DVD, and when information regarding the dividing results is stored in a recording management area allocated at an inner area of the disc, an amount of the information can not exceed one RUB when the disc is used, and the size of the information is limited to a 2KB sector.

Since data is recorded or reproduced in RUB units, each having 64KB in accordance with a high density data trend, when a disc management structure is recorded or reproduced, the size of a block for recording is 64KB, even if the size of the disc management structure is only one sector size, and a disc drive often must pad the remaining portion of that 64K block with a value such as 00h. Therefore, since the 64KB block must be reproduced simultaneously when the data is reproduced, the efficiency is deteriorated. This problem causes unnecessary power consumption in a portable disc drive.

Also, in a write-once information storage medium, since the disc management structure described above cannot be overwritten, when an update of the disc management structure is required, a new area is allocated and the updated disc management structure must be recorded on the new area. Therefore, since more areas are required for updates, or the number of updates is reduced in accordance with the size of the RUB, the medium is inefficiently used. Since a decrease of the size of the RUB is accompanied with a decrease in error correction ability of the RUB under the same efficiency of the RUB, it will be understood that this problem must be considered. In general, it is preferable that the size of the error correction block increases to provide a maximum storage space while maintaining the data rate of the RUB and compensate for a decrease of error correction ability due to a high density in the user data area. However, for the disc management structure, it is more efficient, due to reasons described above, to minimize the size of the error correction block rather than increasing the size of the error correction block, and compensate for the decrease of error correction ability due to a minimization of the error correction block by increasing an additional parity ratio.

Therefore, a medium having two error correction blocks, such as an error correction block A for recording/reproducing the disc management structure, and an error correction block B for recording/reproducing the user data, is required. Since one disc-type medium includes an area A on which an RUB A including the error correction block A is recorded, and an area B on which an RUB B including the error correction block B is recorded, it is necessary to define address information represented with a wobbled groove, referred to as an address in pregroove (ADIP), considering the RUB A and the RUB B included in both areas A and B. For the system to be efficiently used and to perform well, it is preferable that methods of reproducing addresses recorded on the two areas are the same, even if the address information is applied to a disc-type medium having two types of RUBs in a recordable area.

Apparatuses and methods for recording address information on a disc-type information storage medium and an ADIP structure of a disc on which tracks are wobbled in pregroove are disclosed in Korea Patent Publication No. 2003-1520 and Korea Patent Publication No. 2003-30975.

According to conventional technologies as shown in Figures 1A and 1B, one RUB includes 498 recording frames. In Korea Patent Publication No. 2003-1520, address information corresponding to one RUB is represented as a wobbled groove. The address information corresponding to one RUB includes two address blocks (ABs). In Korea Patent Publication No. 2003-30975, the address information corresponding to one RUB includes three ABs. Each of the ABs of the two conventional technologies includes 83 ADIP bits. However, the number of wobbles included in one ADIP bit is different in the two conventional technologies. In Korea Patent Publication No. 2003-1520, one ADIP bit includes 42 wobbles, and a nominal wobble length corresponds to 138 channel bits. In Korea Patent Publication No. 2003-30975, one ADIP bit includes 56 wobbles, and a nominal wobble length corresponds to 69 channel bits. In the two conventional technologies, an error correction code including address information made up of 15 nibbles is obtained by decoding the AB including 83 ADIP bits.

Since an area A to record RUB As thereon and an area B to record RUB Bs thereon exist in one disc-type information storage medium, it is necessary to define a correlation between address information of the area A and address information of the area B.

If each of the areas A and B of the disc-type information storage medium has a different type of AB, a method of decoding the AB is also different. In this case, when an optical beam is irradiated on an area of the disc-type information storage medium, since it is not defined what method is used to decode an AB, additional information or an additional circuit is necessary to select a method of decoding the AB.

An RUB includes a physical cluster for error correction and a link part having a predetermined length to protect data of the physical cluster. In Korea Patent Publication No. 2003-30975, a structure of the RUB including the physical cluster made up of 496 recording frames and the link part made up of 2 recording frames is described in detail. The link part includes a run-in part and a run-out part.

According to the coexistence of the area A to record data in RUB A units and the area B to record data in RUB B units, a link part structure different from a conventional technology of recording data using one type of RUB is required.

According to the present invention there is provided an apparatus and method as set forth in the appended claims. Preferred features of the invention will be apparent from the dependent claims, and the description which follows.

The present invention provides an address information recording apparatus and method of reproducing data more efficiently when the data is recorded in a disc-type information storage medium using different types of RUBs, and a disc-type information storage medium therefor.

Additional aspects and/or advantages of the invention will be set forth in part in the description which follows and, in part, will be obvious from the description, or may be learned by practice of the invention.

According to an aspect of the present invention, there is provided a disc-type information storage medium comprising: a first recording area on which data is recorded using a first recording unit block (RUB); and a second recording area on which data is recorded using a second RUB; wherein first address information corresponding to the first RUB includes n address blocks (ABs), n being an integer ≥ 1; second address information corresponding to the second RUB includes m ABs, m being an integer ≥ 1; and data structures of the ABs of the first RUB are identical to the ABs of the second RUB.

According to another aspect of the present invention, there is provided an address information recording apparatus, which records address information on a disc-type information storage medium including a first recording area on which data is recorded using a first RUB and a second recording area on which data is recorded using a second RUB, comprising: an address information generator to generate first address information corresponding to the first RUB and second address information corresponding to the second RUB; a modulator to modulate the first address information and the second address information; and an address information recorder to write the modulated first address information and the modulated second address information on the first recording area and the second recording area, respectively; wherein the modulated first address information includes n ABs, n being an integer ≥ 1; the modulated second address information includes m ABs, m being an integer ≥ 1; and data structures of the ABs of the first RUB are identical to the ABs of the second RUB.

According to another aspect of the present invention, there is provided a method of recording address information on a disc-type information storage medium including a first recording area on which data is recorded using a first RUB and a second recording area on which data is recorded using a second RUB, the method comprising: generating first address information corresponding to the first RUB and second address information corresponding to the second RUB; modulating the first address information and the second address information; and writing the modulated first address information and the modulated second address information on the first recording area and the second recording area, respectively; wherein the modulated first address information includes n ABs, n being an integer ≥ 1; the modulated second address information includes m ABs, m being an integer ≥ 1; and data structures of the ABs of the first RUB are identical to the ABs of the second RUB.

These and/or other aspects and advantages of the invention will become apparent and more readily appreciated from the following description of the embodiments, taken in conjunction with the accompanying drawings of which:

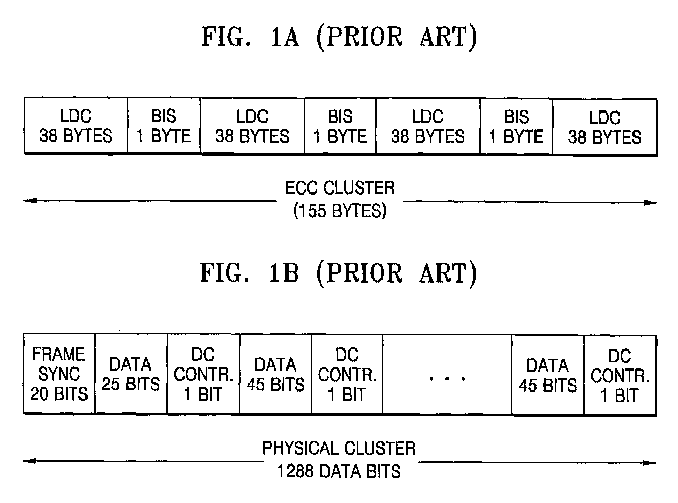

Figure 1 illustrates a recording frame structure of a conventional error correction block;
Figure 2 illustrates a disc-type information storage medium according to an embodiment of the present invention;
Figure 3 illustrates a structure of address information according to an embodiment of the present invention;
Figure 4 illustrates a structure of address information according to another embodiment of the present invention;
Figure 5 illustrates a structure of a RUB A according to the embodiment of the present invention illustrated in Figure 3;
Figure 6 illustrates a structure of a RUB B according to the embodiment of the present invention illustrated in Figure 3;
Figure 7 illustrates a structure of a RUB A according to the embodiment of the present invention illustrated in Figure 4;
Figure 8 illustrates a structure of a RUB B according to the embodiment of the present invention illustrated in Figure 4; and
Figure 9 illustrates a block diagram of an apparatus to record address information according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

In the present invention, data structures of address blocks (ABs) including address information on two areas A and B, on which data is recorded using different recording unit blocks (RUBs), are identical regardless of which RUB is used. Therefore, since addresses can be reproduced over all areas of a medium using one address reproducing method, deterioration of system performance due to address reproducing methods for handling the different RUBs can be prevented. That is, in the areas A and B, only the numbers of ABs included in the RUBs are different from each other, and data structures of the ABs in all recordable areas are all identical.

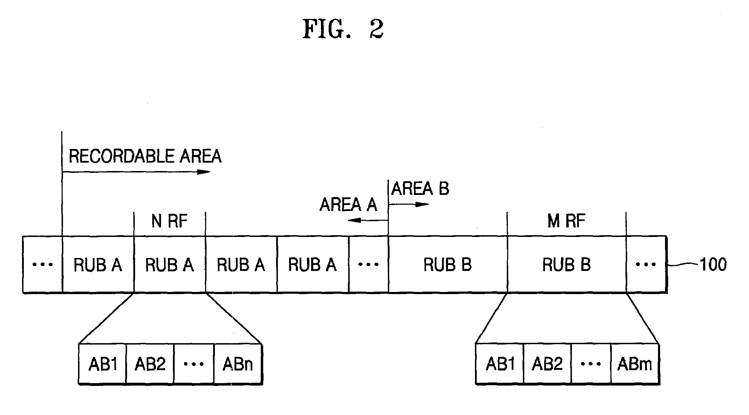

Figure 2 illustrates a disc-type information storage medium 100 according to an embodiment of the present invention. Referring to Figure 2, the disc-type information storage medium 100 includes an area A on which an RUB A is recorded, and an area B on which an RUB B is recorded. The RUB B, which is used to record user data, includes M recording frames. Address information corresponding to the RUB B includes m ABs. The RUB A, which is used to record a disc management structure, includes N recording frames. Address information corresponding to the RUB A includes n ABs. The address information according to this embodiment is recorded on the disc-type information storage medium 100 using a wobbled groove.

Structures of respective ABs included in the address information corresponding to the RUB A and the RUB B are identical. Two of the possible embodiments of a structure of address information according to the present invention will now be described in detail. While these two embodiments are referred to as first and second embodiments, these references do not imply that either of the embodiments is preferred over another.

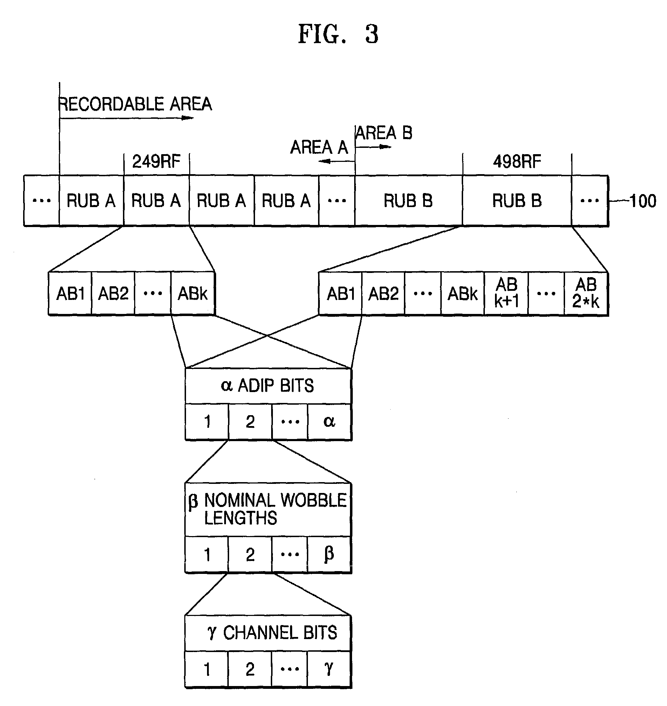

Figure 3 illustrates a structure of address information according to a first embodiment of the present invention. Referring to Figure 3, an RUB A includes 249 recording frames, and an RUB B includes 498 recording frames.

The RUB B includes 496 recording frames for a physical cluster and 2 recording frames for linking. The 496 recording frames for the physical cluster are divided into 16 address units, and each address unit includes 31 recording frames. The RUB A includes 248 recording frames for a physical cluster and 1 recording frame for linking, or 247 recording frames for the physical cluster and 2 recording frames for linking. In the former, the 248 recording frames for the physical cluster are divided into 8 address units, and each address unit includes 31 recording frames as the address unit of the RUB A. In the latter, the 247 recording frames for the physical cluster are divided into 13 address units, and each address unit includes 19 recording frames.

Address information corresponding to the RUB A includes k address blocks AB1 through ABk, and address information corresponding to the RUB B includes 2k address blocks AB1 through AB2k. Each address block includes α ADIP bits. One ADIP bit corresponds to β wobble lengths, and one wobble length corresponds γ channel bits.

Table 1 shows an example of values of α, β, and γ related to a value of k, which is the multiple of the number of address blocks included in each RUB.

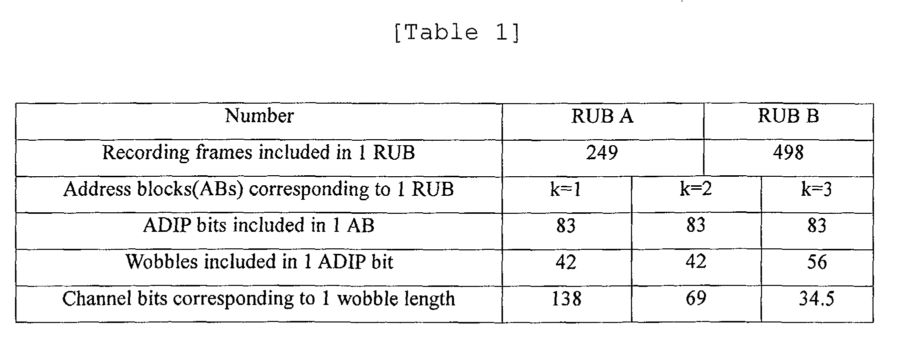

When k=1 or k=2, a method of discriminating data bits and sync bits in one ADIP bit corresponding to 42 wobbles is described in detail in Korea Patent Publication No. 2003-1520. When k=3, a method of discriminating data bits and sync bits in one ADIP bit corresponding to 56 wobbles is described in detail in Korea Patent Publication No. 2003-30975.

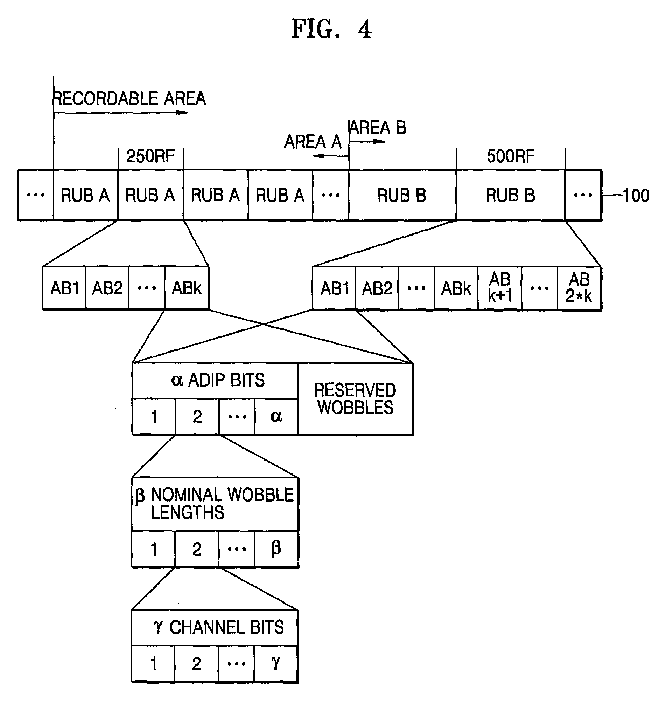

Figure 4 illustrates a structure of address information according to a second embodiment of the present invention. Referring to Figure 4, an RUB A includes 250 recording frames, and an RUB B includes 500 recording frames. Unlike the first embodiment, one AB includes α ADIP bits and predetermined reserved wobbles.

The RUB B includes 496 recording frames for a physical cluster and 4 recording frames for linking. The 496 recording frames for the physical cluster are divided into 16 address units, and each address unit includes 31 recording frames. The RUB A includes 248 recording frames for a physical cluster and 2 recording frames for linking. The 248 recording frames for the physical cluster are divided into 8 address units, and each address unit includes 31 recording frames as the address unit of the RUB A.

Address information corresponding to the RUB A includes k address blocks AB1 through ABk, and address information corresponding to the RUB B includes 2k address blocks AB1 through AB2k. Each address block includes α ADIP bits. One ADIP bit corresponds to β wobble lengths, and one wobble length corresponds γ channel bits.

Table 2 shows an example of values of α, β, and γ related to a value of k, which is the multiple of the number of address blocks included in one RUB. These values are identical to the values of Table 1. Table 2 also shows an example of the number of predetermined reserved wobbles.

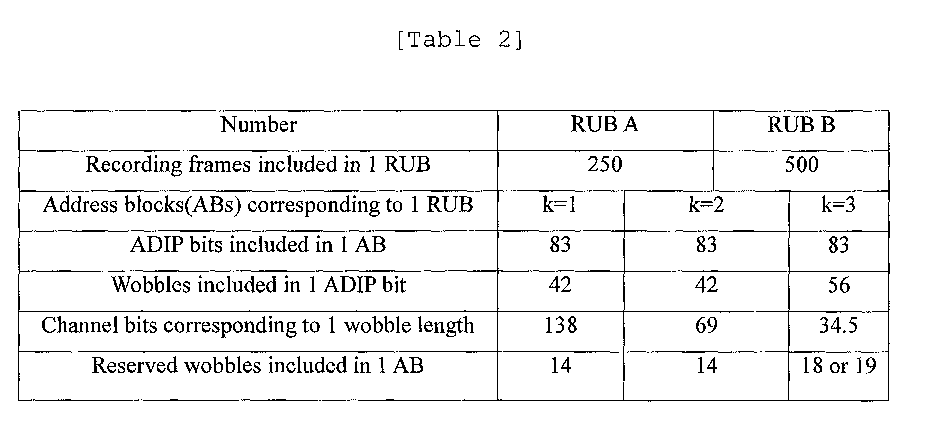

When k=1 or k=2, each address block includes 83 ADIP bits and 14 reserved wobbles.

When k=3, 3 address blocks can be stored in one RUB A, and 6 address blocks can be stored in one RUB B. Here, the total number of reserved wobbles in the RUB A is 56 corresponding to a length of 1 recording frame, and the 56 wobbles can be distributed to 3 address blocks as 18, 19, and 19. Likewise, in the RUB B, 18, 19, 19, 18, 19, and 19 wobbles can be respectively distributed to 6 address blocks.

When k=1 or k=2, a method of discriminating data bits and sync bits in one ADIP bit corresponding to 42 wobbles is described in detail in Korea Patent Publication No. 2003-1520.

When k=3, a method of discriminating data bits and sync bits in one ADIP bit corresponding to 56 wobbles is described in detail in Korea Patent Publication No. 2003-30975.

A structure of the RUB according to an embodiment of the present invention will now be described. In this embodiment, when data is recorded on a disc-type information storage medium using two types of RUBs, such as the RUB A and the RUB B, a ratio of a length of a link part included in the RUB A to a length of a link part included in the RUB B is identical to a ratio of a length of a physical cluster A included in the RUB A to a length of a physical cluster B included in the RUB B.

According to an embodiment of the present invention, the RUB A and the RUB B are a 32KB error correction code (ECC) block and a 64KB ECC block, respectively. The area A in which data is recorded on the RUB A is a lead-in area (or an inner area) located at an inner circumference of the disc-type information storage medium 100, and the area B in which data is recorded on the RUB B is located next to the area A. In the present embodiment, the area A and the area B correspond to the lead-in area (or the inner area) and the lead-out area (or an outer area), respectively. That is, data is recorded on the lead-in area (or the inner area) of the disc-type information storage medium 100 in 32KB ECC block units, and on the lead-out area (or the outer area) in 64KB ECC block units.

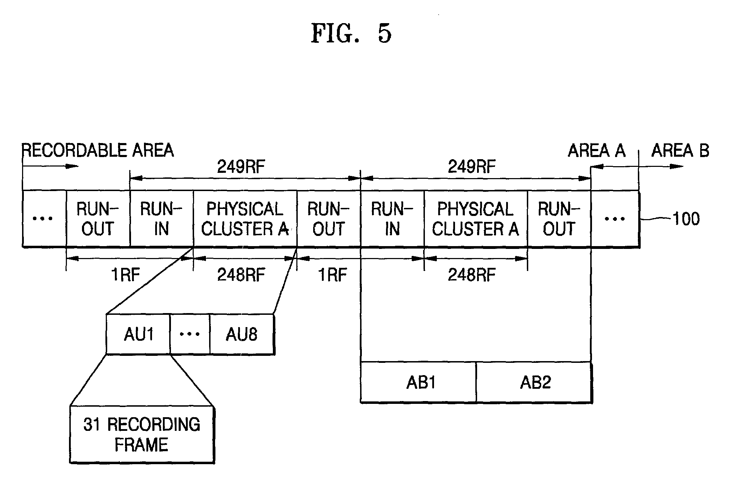

A structure of the link parts included in the RUB A and the RUB B will now be described in detail with reference to Figures 5 through 8.

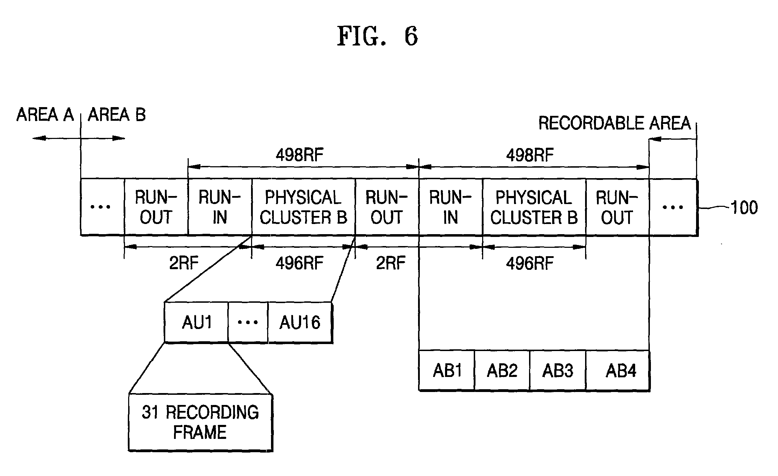

Figure 5 illustrates a structure of the RUB A according to the first embodiment of the present invention shown in Figure 3, and Figure 6 illustrates a structure of the RUB B according to the first embodiment of the present invention. According to the first embodiment of the present invention, the link part of the RUB A has 1 recording frame length, and the link part of the RUB B has 2 recording frame lengths.

The RUB A shown in Figure 5 includes 248 recording frames for a physical cluster A and 1 recording frame for linking. The 248 recording frames are divided into 8 address units, and each address unit of the RUB A includes 31 recording frames, which is the same as each address unit of the RUB B. The RUB B shown in Figure 6 includes 496 recording frames for a physical cluster and 2 recording frames for linking. The 496 recording frames are divided into 16 address units, and each address unit includes 31 recording frames.

The structures of the address information corresponding to the RUB A and the RUB B shown in Figures 5 and 6 are identical to the structures shown in Figures 3 and 4. However, the address information corresponding to the RUB A shown in Figure 5 includes 2 address blocks such as AB1 and AB2, and the address information corresponding to the RUB B shown in Figure 6 includes 4 address blocks such as AB1 through AB4.

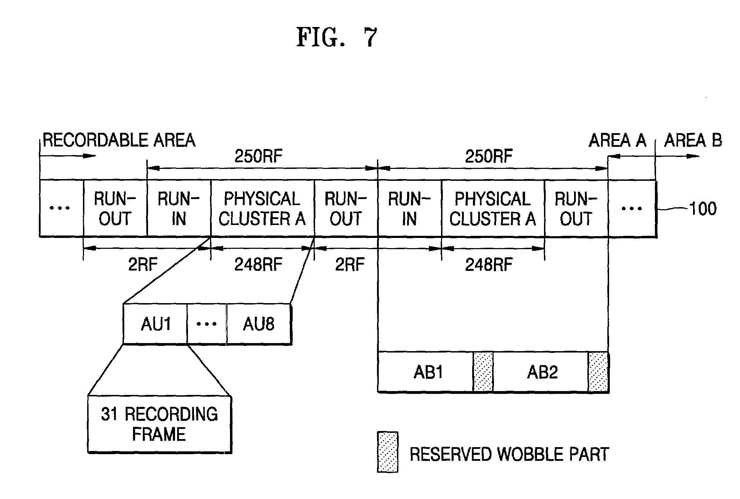

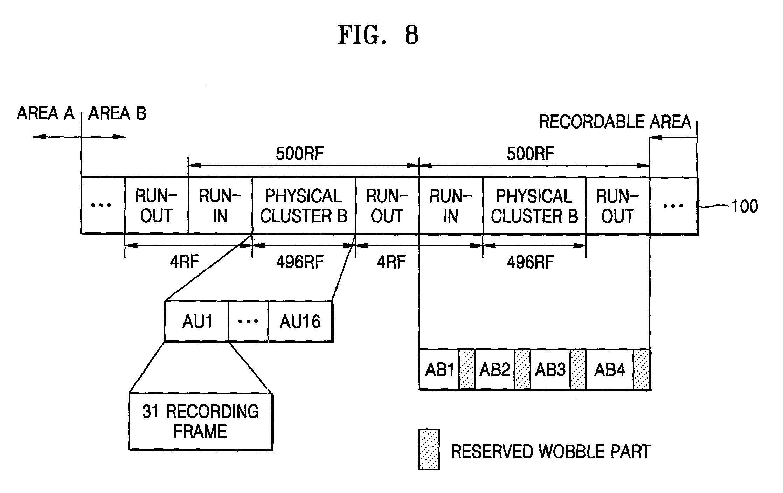

Figures 7 and 8 are structures of the RUB A and the RUB B, respectively, according to the second embodiment of the present invention shown in Figure 4. According to the second embodiment of the present invention, the link part of the RUB A and the RUB B have 2 and 4 recording frame lengths, respectively.

The RUB A shown in Figure 7 includes 248 recording frames for a physical cluster and 2 recording frames for linking. The 248 recording frames are divided into 8 address units, and each address unit of the RUB A includes 31 recording frames, which is the same as each address unit of the RUB B. The RUB B shown in Figure 8 includes 496 recording frames for a physical cluster and 4 recording frames for linking. The 496 recording frames are divided into 16 address units, and each address unit includes 31 recording frames.

Similar to the address blocks shown in Figures 5 and 6, each address block shown in Figures 7 and 8 includes 83 ADIP bits, and each ADIP bit includes 42 wobbles. A physical length of one wobble corresponds to 69 channel bits. The address information shown in Figures 7 and 8 includes reserved wobble parts, each of which has a length corresponding to 14 wobbles. Therefore, the size of the reserved wobble part in the RUB A corresponds to 2*14 wobbles, 28*69 channel bits, or 1 recording frame, and the size of the reserved wobble part in the RUB B corresponds to 4*14 wobbles, 56*69 channel bits, or 2 recording frames.

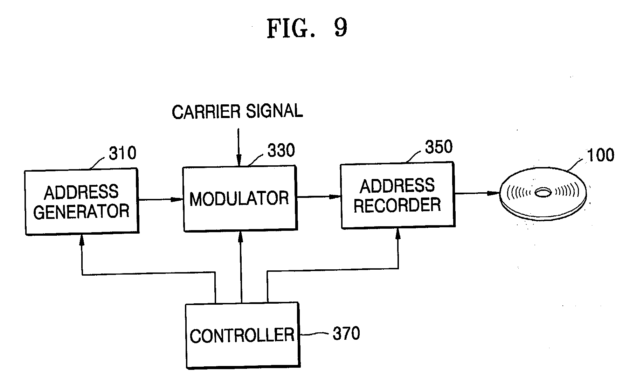

Figure 9 is a block diagram of an apparatus to record address information according to an embodiment of the present invention. The address information recording apparatus records address information on a disc-type information storage medium 100. The disc-type information storage medium 100 and the address information have been described above.

Referring to Figure 9, the address information recording apparatus includes an address generator 310, a modulator 330, an address recorder 350, and a controller 370. The address generator 310 generates a sync signal, address data, and an address including an ECC of the address data, and provides them to the modulator 330.

The modulator 330 modulates the address received from the address generator 310 using a predetermined method, and provides a modulated address signal to the address recorder 350. A carrier signal required to modulate the address is input to the modulator 330. There are several modulation methods, including a minimum shift keying (MSK) method.

The address recorder 350 receives the modulated address signal and forms wobbled grooves on the disc-type information storage medium 100 in accordance with the modulated address signal. A structure of the address information recorded on the disc-type information storage medium 100 is identical to those shown in Figures 2 through 4.

The controller 370 controls the operations of the address generator 310, the modulator 330, and the address recorder 350.

As described above, according to an embodiment of the present invention, address information can be reproduced using a single method by permitting structures of the address information corresponding to different types of RUBs to be identical even if data is recorded on a disc-type information storage medium using different types of RUBs.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A disc-type information storage medium comprising:
a first recording area (A) on which data is recorded using a first recording unit block RUB; and
a second recording area (B) on which data is recorded using a second RUB;
wherein first address information corresponding to the first RUB includes n address blocks ABs, n being an integer ≥ 1;
second address information corresponding to the second RUB includes m ABs, m being an integer ≥ 1; and
data structures of the ABs of the first RUB are identical to the ABs of the second RUB.

2. The medium of claim 1, wherein each AB includes a predetermined length of address in pregroove ADIP information and a predetermined length of a reserved wobble part.

3. The medium of claim 1 or 2, wherein the first and second address information are modulated using a predetermined method and wobbled on a groove track.

4. The medium of claim 1, 2 or 3, wherein m is equal to 2n.

5. The medium of any preceding claim, wherein a ratio of a length of a link part included in the first RUB to a length of a link part included in the second RUB is identical to a ratio of a length of a physical cluster included in the first RUB to a length of a physical cluster included in the second RUB.

6. The medium of claim 5, wherein the ratio of the length of the link part included in the first RUB to the length of the link part included in the second RUB is 1:2.

7. An address information recording apparatus, which records address information on a disc-type information storage medium (100) including a first recording area (A) on which data is recorded using a first recording unit block RUB and a second recording area (B) on which data is recorded using a second RUB, the address information recording apparatus comprising:
an address information generator (310) to generate first address information corresponding to the first RUB and second address information corresponding to the second RUB;
a modulator (330) to modulate the first address information and the second address information; and
an address information recorder (350) to write the modulated first address information and the modulated second address information on the first recording area (A) and the second recording area (B), respectively;
wherein the modulated first address information includes n address blocks ABs, n being an integer ≥ 1;
the modulated second address information includes m ABs, m being an integer ≥ 1; and
data structures of the ABs of the first RUB are identical to the ABs of the second RUB.

8. The apparatus of claim 7, wherein each AB includes a predetermined length of address in pregroove (ADIP) information and a predetermined length of a reserved wobble part.

9. The apparatus of claim 7 or 8, wherein the first and second address information are modulated using a predetermined method and wobbled on a groove track.

10. The apparatus of claim 7, 8 or 9, wherein m is equal to 2n.

11. The apparatus of claim 7, 8, 9 or 10, wherein a ratio of a length of a link part included in the first RUB to a length of a link part included in the second RUB is identical to a ratio of a length of a physical cluster included in the first RUB to a length of a physical cluster included in the second RUB.

12. The apparatus of claim 11, wherein the ratio of the length of the link part included in the first RUB to the length of the link part included in the second RUB is 1:2.

13. A method of recording address information on a disc-type information storage medium (100) including a first recording area (A) on which data is recorded using a first recording unit block (RUB) and a second recording area (B) on which data is recorded using a second RUB, the method comprising:
generating first address information corresponding to the first RUB and second address information corresponding to the second RUB;
modulating the first address information and the second address information; and
writing the modulated first address information and the modulated second address information on the first recording area (A) and the second recording area (B), respectively;
wherein the modulated first address information includes n address blocks ABs, n being an integer ≥ 1;
the modulated second address information includes m ABs, m being an integer ≥ 1; and
data structures of the ABs of the first RUB are identical to the ABs of the second RUB.

14. The method of claim 13, wherein each AB includes a predetermined length of address in pregroove ADIP information and a predetermined length of a reserved wobble part.

15. The method of claim 13 or 14, wherein the first and second address information are modulated using a predetermined method and wobbled on a groove track.

16. The method of claim 13, 14 or 15, wherein m is equal to 2n.

17. The method of claim 13, 14, 15 or 16, wherein a ratio of a length of a link part included in the first RUB to a length of a link part included in the second RUB is identical to a ratio of a length of a physical cluster included in the first RUB to a length of a physical cluster included in the second RUB.

18. The method of claim 17, wherein the ratio of the length of the link part included in the first RUB to the length of the link part included in the second RUB is 1:2.

19. A disc-type information storage medium comprising:
data recorded in at least two recording unit blocks RUBs having different sizes;
wherein address information corresponding to the RUBs having different sizes includes address blocks having a same data structure regardless of a size of the respective RUBs.

20. An address information recording apparatus to record address information on a disc-type information storage medium (100) on which data is recorded in at least two recording unit blocks RUBs having different sizes, the address information recording apparatus comprising:
an address information recorder (350) to write the address information in the RUBs having different sizes;
wherein the address information includes address blocks that have a same data structure regardless of a size of the respective RUBs.

21. The address information recording apparatus of claim 20, further comprising:
an address information generator (310) to generate the address information corresponding to the respective RUBs.

22. The address information recording apparatus of claim 21, further comprising a modulator (330) to modulate the address information before the address information is written in the RUBs.

23. A method of recording address information on a disc-type information storage medium (100), the method comprising:
recording data in at least two recording unit blocks RUBs having different sizes;
wherein address information corresponding to the RUBs having different sizes includes address blocks having a same data structure regardless of a size of the respective RUBs.
